# EUROPEAN PATENT APPLICATION

(11) **EP 0 982 957 A1**
(43) Date of publication of application: **01.03.2000**
(21) Application number: 98306841.2
(22) Date of filing: 26.08.1998
(51) Int. Cl.: H04Q 7/32, H04Q 7/38

(54) **Mobile communication service subscription method**

(71) Applicant: ICO Services Ltd., London W6 9BN (GB)
(72) Inventor: Poisson, Lionel, London W4 1DD (GB)
(74) Representative: Musker, David Charles

(57) **Abstract**

A method of authorising a new subscriber to use a user terminal in a mobile communications system utilising a wireless communications link, comprising the steps of: supplying authorisation data to a memory to be used in said user terminal, and storing said data in said memory, characterised in that said data is supplied by the steps of: setting up a communications session through said wireless communications link; and supplying said data through said link to said memory.

## Description

This invention relates to a method for implementing the subscription process for a new customer to a mobile communication service, particularly but not exclusively for satellite communication.

Various mobile voice communications systems are known. The invention is envisaged for use in satellite mobile digital communications systems such as the Inmarsat-M satellite telephone system, the IRIDIUM ™ satellite cellular system (described in, for example, EP-A-0365885), the ICO ™ satellite cellular system (described in, for example, GB-A-2295296) or the ODYSSEY ™ satellite cellular system (described in, for example, EP-A-0510789). However, the invention is also envisaged for use in corresponding terrestrial digital mobile communication systems, such as GSM, or other mobile communication service.

In each of the above systems, and those like them, the process of subscription involves similar objectives. Firstly, a contract between the customer or subscriber and the service provider needs to be agreed. In addition to this, the databases operated by the service provider and the mobile terminal of the subscriber need to be updated with various details pertaining to the subscriber and his selected services.

At subscription a subscriber to a GSM service, for example, receives a Subscriber Identity Module (SIM), usually together with an associated mobile terminal. On the SIM are stored various data which determine how the mobile terminal may be used and also provide the security features on the mobile side of the network interface: These include: the International Mobile Subscriber Identity (IMSI), the Individual Mobile Subscriber Authentication Key (Kᵢ) and the Authentication algorithm A3, together with various other information.

Traditionally, in the case of terrestrial digital mobile communication systems such as GSM, the service provider waits for new subscription applications to be sent by post. From such applications, the service provider will personalise and activate a SIM, according to the customer profile and will subsequently send the SIM back to the customer, or an agent acting on his behalf, for incorporation in a user terminal. The time for this process to be completed may vary between a few hours to several days and is therefore often inconvenient for the subscriber.

Alternatively, the SIM may be personalised and activated at the point of sale, such as a dealer shop. This is achieved through the use of a communications device at the point of sale which allows remote communication with the network operator and/or service provider database and which is also able to write, via a card reader the required information on the SIM card.

Although this method of subscription is quicker than the postal method, it relies upon dedicated hardware, including a smartcard reader, and a secure communications network connecting the point of sale with the service provider. This is necessary in order to ensure that the subscription and user information remains secret to unauthorised users, who may otherwise be able to fraudulently use the service.

In some areas, particularly some less developed areas, the small number of likely subscribers may make the outlay required to purchase the dedicated hardware uneconomic for the local dealers. Furthermore, in various parts of the world, no secure communications network is available.

In a known subscription system operated by one PCN operator the above mentioned problems are addressed in the following manner. The authorised dealers are issued with "starter packs" containing the particular PCN network specific mobile terminals together with a "pre-activated" SIM and an instruction brochure. As the SIM is "pre-activated", the home location register (HLR) has already been pre-programmed to recognise the SIM; for example it already contains a record of the Mobile Station ISDN number (MSISDN), which is its dial number, and the IMSI for that SIM.

Initially, the use of the mobile terminal is limited to dialling the customer care centre of the service provider through the use of a Fixed Dialling Number flag (as defined in GSM recommendation 11.11 [14]). When a new subscriber dials this number and provides the customer care centre with the subscription information that is required, the customer care centre may then authorise full subscription use of that SIM/mobile terminal. This is achieved by sending a short message instructing the SIM to remove the Fixed Dialling Number flag. This has the effect of allowing the subscriber to dial any number within the limits of his selected subscription.

Such a system is possible where the service provider is in full control both of its dealer network and the specification of the SIM/user terminal combination which may be used with the network. However, where this is not possible, such a system would be open to fraudulent activity.

Therefore, there is a need for an inexpensive and reliable method of allowing rapid point of sale subscription to a communication network in which the service provider does not retain complete control over the distribution and specification of the SIM/user terminal combination which may be used with the network.

In accordance with the present invention there is provided a method of enabling a new subscriber to use a user terminal in a mobile communications system utilising a wireless communications link, comprising the steps of:
supplying authorisation data to a memory to be used in said user terminal, and storing said data in said memory,
   characterised in that said data is supplied by the steps of:
setting up a communications session through said wireless communications link; and
supplying said data through said link to said memory.

By providing a mobile communication subscription method according to the present invention a new subscriber can be offered almost immediate access to his required services, even in areas in which a lack of secure communications and subscriber demand would normally prevent dealers from operating securely. This feature makes the present invention particularly suited to satellite communication systems which may provide partial, or full global coverage.

Furthermore, it allows the service provider to use industry standard equipment, as opposed to operator specific and specially designed mobile terminals and/or SIMs, which allows cost savings to be made.

Preferably, the authorisation data is transmitted in encrypted form. This ensures that the authorisation data remains secret to unauthorised users, who would otherwise be able to fraudulently use the service.

Advantageously, when the invention is applied to communication systems such as GSM, which incorporates a ciphering mechanism, that ciphering mechanism may be employed for the purposes of implementing the present invention in a secure manner. Thus, the cost and difficulty of integrating the present invention in an existing communication system in a practical manner is greatly reduced.

Furthermore, in the event that the ciphering algorithms employed in known communication systems prove to be less secure than envisaged, users who require replacement user and authorisation details to replace those which have become known to unauthorised users will be able to quickly and easily obtain a new identity. If required, this could be carried out on a regular basis as a precautionary anti-fraud measure. Since the process would require no new hardware, it would be possible to implement such a process very inexpensively.

Other aspects and embodiments of the invention, with corresponding objects and advantages, will be apparent from the following description and claims. The invention will now be illustrated, by way of example only, with reference to the accompanying drawings, in which:

### BRIEF DESCRIPTION OF THE DRAWINGS

Figure 1 illustrates the system block diagram of a communications system suitable for use with the present invention.
Figure 2 is a block diagram showing schematically the elements of a known communications system required for implementing the subscription process according to the present invention;
Figure 3 is a block diagram showing schematically the elements of a mobile terminal suitable for use with the present invention;
Figure 4 is a block diagram showing schematically the elements of a database station suitable for use with the present invention;
Figure 5 is a flow diagram illustrating the subscription process of the present invention.

### PREFERRED EMBODIMENT

This embodiment of the invention is described as applied to a mobile satellite telecommunications system.

### System Hardware

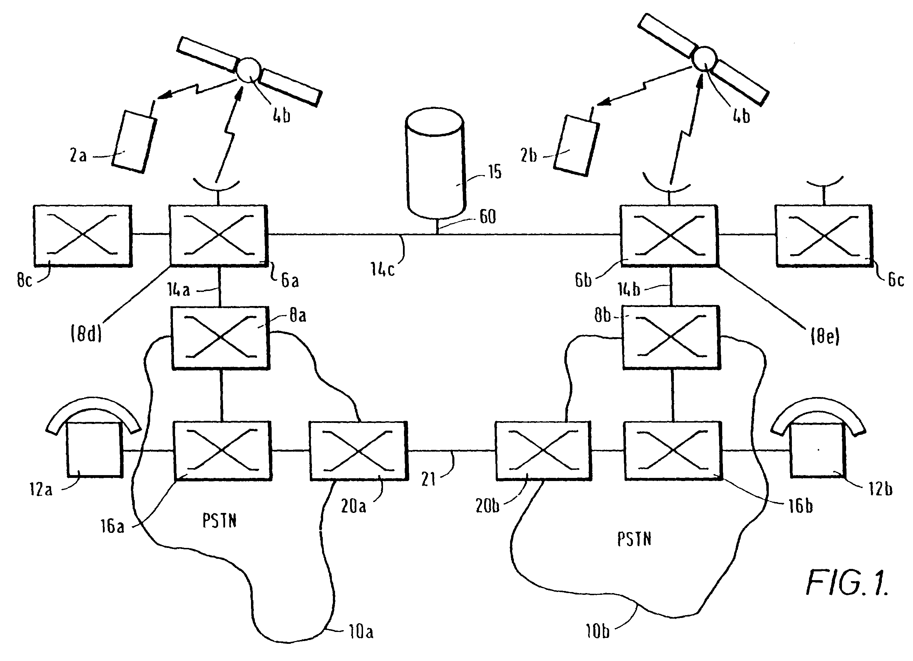

Details of the telecommunications network do not form part of the invention, but one such system will be briefly described below in order to aid the understanding of the present invention. Referring to Figure 1, a satellite communications network according to this embodiment comprises mobile user terminal equipment 2a, 2b; orbiting relay satellites 4a, 4b; satellite earth station nodes 6a, 6b; satellite system gateway stations 8a, 8b; public switched telecommunications networks 10a, 10b; and fixed telecommunications terminal equipment 12a, 12b.

Interconnecting the satellite system gateways 8a,8b with the earth station nodes 6a,6b, and interconnecting the nodes 6a,6b with each other, is a dedicated ground-based network comprising channels 14a, 14b, 14c. The satellites 4, earth station nodes 6 and lines 14 make up the infrastructure of the satellite communications network, for communication with the mobile terminals 2, and accessible through the gateway stations 8.

A terminal location database station 15 is connected, via a signalling link 60 (e.g. within the channels 14 of the dedicated network) to the gateway station and earth stations 6.

The PSTNs 10a,10b comprise, typically, local exchanges 16a,16b to which the fixed terminal equipment 12a,12b is connected via local loops 18a,18b; and international switching centres 20a, 20b connectable one to another via transnational links 21 (for example, satellite links or subsea optical fibre cable links). The PSTNs 10a,10b and fixed terminal equipment 12a,12b (e.g. telephone instruments) are well known and almost universally available today.

Each mobile terminal 2 apparatus is in communication with a satellite 4 via a full duplex channel (in this embodiment) comprising a down link channel and an up link channel, for example (in each case) a TDMA time slot on a particular frequency allocated on initiation of a call, as disclosed in UK patent applications GB 2288913 and GB 2293725. The satellites 4 in this embodiment are non-geostationary, and thus, periodically, there is hand over from one satellite 4 to another.

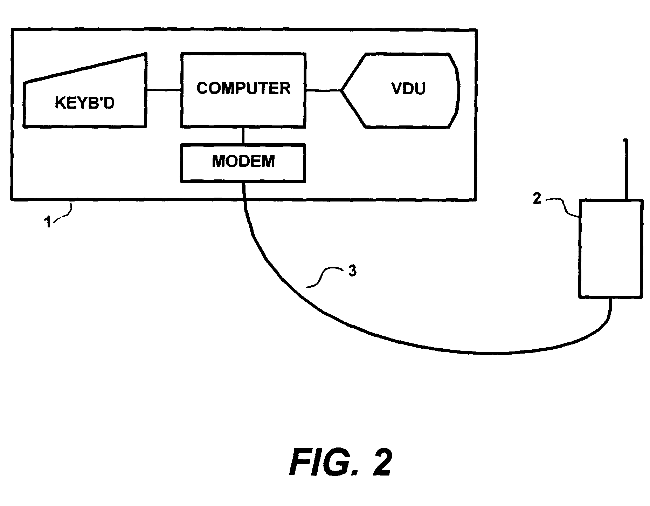

Referring to Figure 2, a block diagram of the hardware required to carry out the subscription process according to the present embodiment is shown. This comprises subscriber mobile terminal 2 connected to a personal computer 5, operated by mobile terminal dealer at the point of sale 1.

### Mobile terminal 2

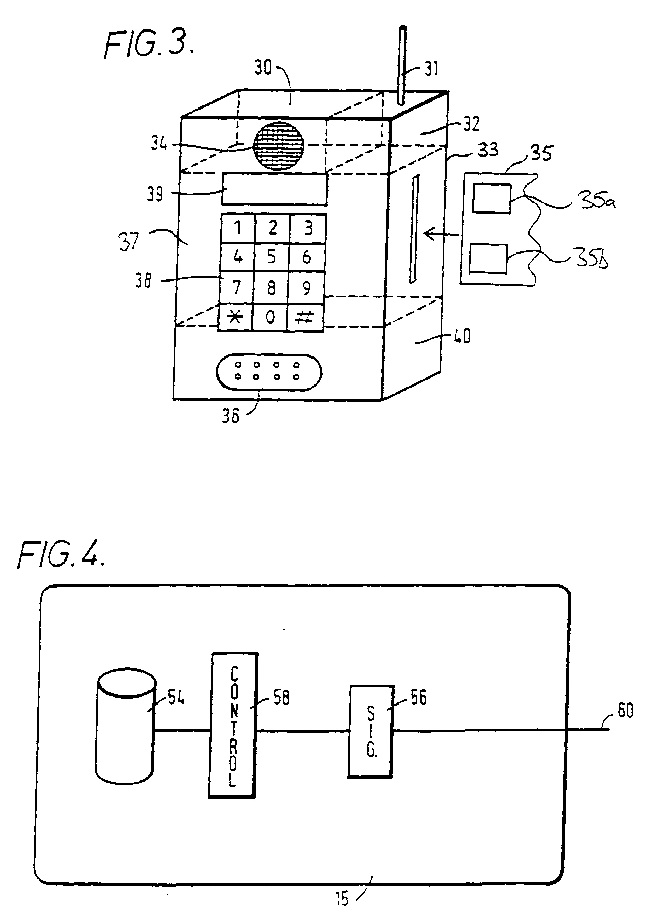

Referring to Figure 3, one form of handset suitable for use in the present invention is shown. Details of the handsets 2a,2b etc. do not form part of the present invention, but they may comprise handsets similar to those presently available for use with the GSM system, comprising a digital coder/decoder 30, together with conventional microphone 36, loudspeaker 34, battery 40 and keypad components 38, and a radio frequency (RF) interface 32 and antenna 31 suitable for satellite communications. Preferably a display 39 (for example a liquid crystal display) is also provided. A "smart card" reader 33 for receiving a smart card SIM 35 which stores user information, and for reading and writing from the SIM 35 is also provided.

Also provided is a control circuit 37 (which may in practice be integrated with the coder 30) consisting of a suitably programmed microprocessor,microcontroller or digital signal processor (DSP) chip.

Further provided is a data port (not shown) for receiving serial data from a device such as a computer.

The SIM 35 preferably complies with GSM Recommendations 02.17 "Subscriber Identity Modules", and 11.11 and is preferably implemented as an industry standard "Smart Card", although a "Plug-in" SIM which is mounted internally in the handset may alternatively be used.

The SIM 35 and reader 33 are therefore preferably as described in International Standards ISO 7810, 7811 and 7816; these and GSM 02.17 and 11 .11 are all incorporated herein by reference.

Specifically, the SIM 35 includes a processor 35a and permanent memory 35b. The processor 35a is arranged to perform some encryption functions as described in greater detail below.

### Database Station 15

Referring to Figure 4 the database station 15 comprises a digital data store 54, a signalling circuit 56, a processor 58 interconnected with the signalling circuit 56 and the store 54, and a signalling link 60 interconnecting the database station 15 with the gateway stations 8 and Earth stations 6 making up satellite system network, for signalling or data message communications.

The store 54 contains amongst other data, for every current subscriber terminal apparatus 2, a record showing the IMSI and/or the ICCID, both of which may be used to identify the SIM 35; the geographical position of the mobile terminal 2 (either in co-ordinate geometry, or as code identifying an area within which it lies); the "home" gateway station 8 with which the apparatus is registered (to enable billing and other data to be collected at a single point) and the currently active Earth station node 6 with which the apparatus 2 is in communication via the satellite 4.

Further, in this embodiment the store contains for each user the unique and individual enciphering key Kᵢ, to be used as described below.

The signalling unit 56 and processor are arranged to receive interrogating data messages, via the signalling circuit 60 (which may be a packet switched connection), from gateways 8 or nodes 6, comprising data identifying one of the mobile terminals 2 (for example, the telephone number of the equipment 2), and the processor 58 is arranged to search the store 54 for the status and active earth station node 6 of the terminal 2 and to transmit these in a reply message via the data line 60.

Thus, in this embodiment the database station 15 acts to fulfil the functions both of a home location register (HLR) of a GSM system, and of an authentication centre (AuC) of a GSM system, and may be based on commercially available GSM products.

### Point of Sale 1

The point of sale 1 comprises a standard personal computer 5 which is arranged to communicate with the mobile terminal 2 using a serial link 3, such as an RS232 interface, and supports the Hayes-compatible modem (AT) command set. The personal computer 5 is arranged to run software specifically written to control the mobile terminal 2 of a new subscriber. The function of the software is, in brief, to activate the mobile terminal 2 to dial the number of the customer care centre of the service provider to which the new subscriber wishes to subscribe and assist in the control of the subscription process; as is described more fully below. Because the software is comparatively simple and requires only a stand alone personal computer 5, it may be distributed to dealers by the system operators or service providers on floppy disc, for example.

Thus, the necessary hardware and software requirements for the point of sale 1 are kept to a low level of complexity (such as any mobile communications dealer would possess as standard equipment).

### Subscription process

The subscription method according to the present invention relies upon SIMs being distributed to retailers, either with or without associated mobile terminals, in a non-activated state. As has been stated above, prior to subscription, the SIM 35 will already contain the IMSI and Kᵢ, as these are recorded on the SIM 35 under tight security during the its manufacture. It will not contain an MSISDN or various other data pertaining to the subscription profile, visitor public land mobile network (PLMN) information or any SIM based services, which are discussed below. In this condition the SIM 35 is said to be "ready for activation".

When the customer has purchased a mobile terminal at the point of sale 1, with an associated SIM in a "ready for activation" state, the mobile terminal is not capable of receiving incoming calls or making outgoing calls. Therefore, if such a mobile terminal with its "ready for activation" SIM were stolen, it would not be usable as a working communications terminal. Despite the fact that the SIM 35 contains an IMSI, it is not acknowledged as a valid IMSI belonging to a known subscriber of the communications network through which an attempt to route the call is made. This is because the database station 15 has not yet been updated with a subscriber record identifying the IMSI as that of a known subscriber.

Once a customer has paid the dealer for the mobile terminal 2, the dealer will assist the customer to subscribe to his chosen communications service.

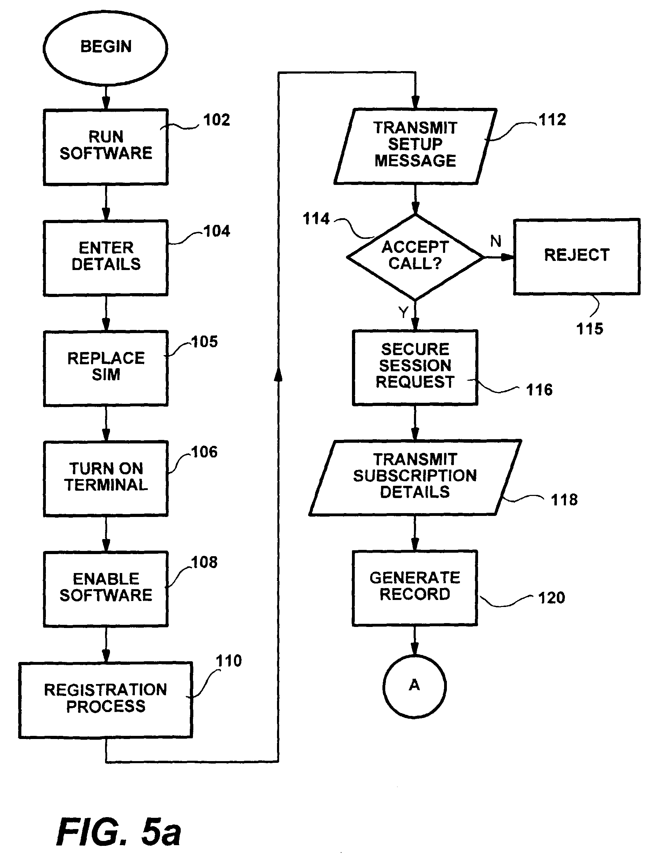

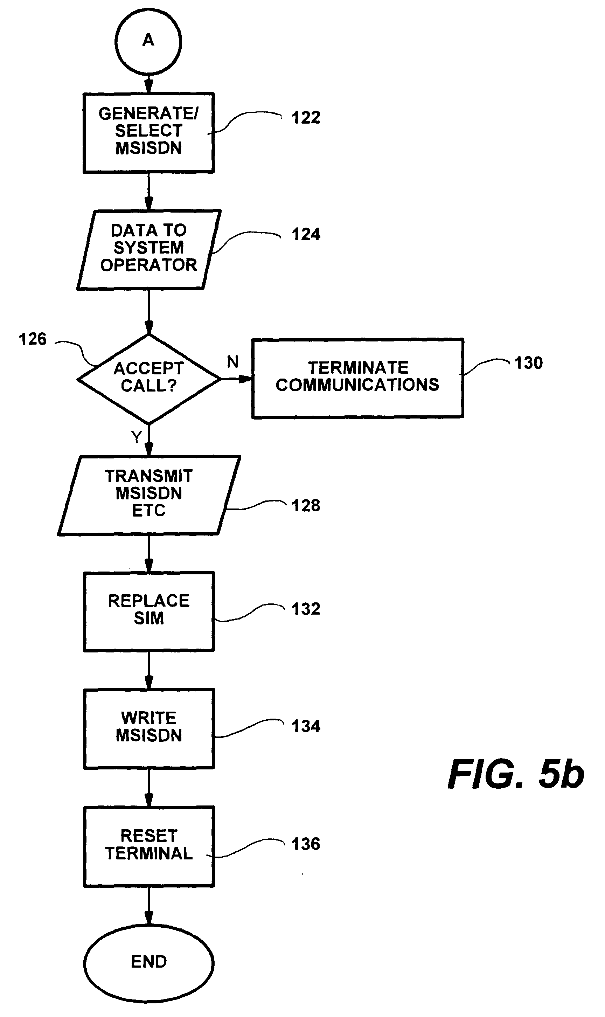

Referring to Figure 5, a flow diagram indicating the steps of the subscription process according to the present invention is shown.

The process starts with the dealer running the subscription software program on the personal computer 5 at step 102. The dealer then enters the user and chosen subscription details into the personal computer 5 at step 104.

These details include the subscriber's name and address, his billing details, his payment details such as a credit card number and the air time package which determine the type of service he wishes to subscribe to. This will determine the range of services which the subscriber will be entitled to use, for example data and voice transmission and the tariffs charged for those services as well as any possible restrictions to use of the service, such as geographic limitations.

Additionally, any SIM-based services which the subscriber wishes to subscribe to are also entered. These services are functions which the mobile terminal user may invoke by activating the SIM 35 through the mobile terminal. For example, the SIM 35 may be used to store and yield up the telephone number of the customer care centre, or the user's own number (MSISDN). The SIM 35 may also be used to store a Personal Identity Number (PIN) without which the mobile terminal will be disabled, or useful-user information such as a yellow pages numbers.

When all of the details have been entered in the personal computer 5 the dealer then replaces the non-activated SIM of the subscriber's mobile terminal 2 with an activated SIM of the dealer at step 105. The dealer then connects the subscriber's mobile terminal 2 to the personal computer 5 by a standard RS232 interface 3 and turns on the mobile terminal 2 at step 106. It is envisaged that the mobile terminal 2 will often be sold by the dealer to the subscriber at the same time as the subscriber takes out his subscription. However, it is possible that the subscriber may already possess a suitable mobile terminal prior to taking out the subscription.

At step 108 the dealer enables the software running on personal computer 5 to start the process of communicating the subscription details to the communication network. This in turn controls the mobile terminal 2 and causes it to perform an automatic registration process at step 110, of the kind well known in the art of cellular terrestrial communications. As is conventional, the registration process takes the form of broadcasting of a signal identifying the mobile terminal 2 on a common hailing or signalling access channel.

The transmitted signal is picked up by one or more satellites 4 and relayed to the database station 15 as is known in the art of satellite communications and described in UK patent application No. 9611411.1.

The effect of the registration process is to establish a suitable radio resource signalling connection between the mobile terminal 2 and the database station 15 via the satellite 4. The mobile terminal 2 then transmits a set up message, again under the control of the personal computer 5, to the database station 15 at step 112. This includes the dial number of the service provider's dedicated customer care centre dealing with subscription. The database station 15 then analyses the request and checks whether it can accept the call, at step 114. In this case, if the request also includes a password and user name of the dealer, which identifies the caller as a customer of a known dealer wishing to subscribe to the communications service, the database station 15 allows the call to be connected. If this information, or any other required data, is not present, or is incorrect the call will not be accepted at step 115.

Once a communication link has been established between the mobile terminal 2 and the database station 15, the database station 15 requests a secure session in accordance with the GSM system, prior to the transmission of the subscription or user details, at step 116.

The GSM system includes an optional encryption scheme described in. for example, "Security aspects and the implementation in the GSM-system"; Peter C.J. van der Arend, paper 4a, Conference Proceedings of the Digital Cellular Radio Conference (DCRC), October 12th-14th 1988, published by Deutsche Bundespost, France Telecom and Fernuniversitate. Greater detail is given in the following GSM recommendations: GSM 02.09 "Security Aspects"; GSM 03.20 "Security Related Network Functions"; GSM 03.21 "Security Related Algorithms".

Such systems are well known in the art, however, for the purposes of clarifying the invention, the processes occurring after the request of a secure session are briefly described below.

In this scheme, a database known as the Authentication Centre (AuC) holds Kᵢ for each subscriber to the authentication service, which, as mentioned above is also stored in the SIM 35 in the subscriber's mobile terminal. The subscriber has no access to the data stored in the SIM 35 and cannot read the key.

Where a secure session is requested, the network sends a Ciphering Mode Command message to the mobile terminal to initiate the secure session. A random number (RAND) is generated by the Authentication Centre and used, together with the customer's key (Kᵢ), to calculate a ciphering key (K_{c}) which is not itself transmitted over the radio path, and is used during the session for ciphering and deciphering messages to and from the subscriber.

The random number is sent to the subscriber's mobile terminal 2 via the Base Transceiver Station (BTS). The mobile terminal 2 then passes the random number to the SIM 35, which calculates the ciphering key K_{c} using an algorithm termed A5.

Thus, the random number is sent over the air, but not the customer's key Kᵢ or the ciphering key K_{c}.

The random number and the ciphering key K_{c} are sent to the Home Location Register (HLR) database storing details for the subscriber concerned and are also sent to the Visiting Location Register (VLR) for the area where the use is currently located, and are supplied to the BTS via which the mobile is communicating.

The ciphering key K_{c} is used, together with the current TDMA frame number, to implement the A5 ciphering algorithm in the mobile terminal and the Base Transceiver Station. Thus, the individual user key Kᵢ is stored only at the authentication centre and the SIM 35, where the ciphering key K_{c} is calculated and forwarded to the BTS and the mobile terminal.

Once a secure session is set up the mobile terminal 2 uploads the customer and subscription details stored on personal computer 5, via the RS232 interface 3 and transmits them via the satellite 4 to the database station 15, at step 118.

When the database station 15 receives the subscriber information from personal computer 5 it automatically generates an entire new customer record, at step 120. This record includes the subscriber and subscription details uploaded from personal computer 5, the IMSI which the database station 15 obtained from the registration process, described above, and the MSISDN which may be either generated automatically by the database station 15, or selected from a list of possible alternatives by the subscriber through the personal computer 5 at the point of sale 1, at step 122.

At step 124, the service provider then in turn provides the system operator with the MSISDN and the IMSI from this customer record, together with details of any SIM based services, requested by the subscriber, which need to be brought to the attention of the system operator.

It should be noted that the service provider could provide the system operator with either the IMSI or the ICCID of the subscriber's SIM 35, since the authorisation centre holds paired IMSI/ICCID data for each SIM 35, which is obtained directly from the SIM manufacturer. Therefore, only one of these two pieces of information is required to derive the other.

The service provider may then run a conventional on line credit check on the details supplied by the subscriber, at step 126.

Upon satisfactory completion of the credit check, the service provider activates the subscription at step 128. In doing so the service provider will transfer the MSISDN via the subscriber's mobile terminal 2 to the dealer's personal computer 5, where it is stored.

It should be noted that at this stage the SIM in the subscriber's mobile terminal is that of the dealer. Therefore at step 132 the dealer replaces the customer's non-activated SIM in the customer's mobile terminal. At step 134 the MSISDN is then written from the dealer's personal computer 5 to the customer's SIM 35 by the card reader 33 of the mobile terminal 2, in order to activate it.

Additionally, at step 128, short messages may be sent from the database station to the dealer's personal computer 5, in order to set the appropriate flags in the subscriber's SIM 35, when it is written to at step 134, to allow or inhibit the services which the subscriber has opted to include or exclude from his subscription.

Optionally, at step 118 information relating to abbreviated dialling numbers (AND) fixed dialling numbers (FDN), and barred dialling numbers (BDN), together with the customer's choice of SIM tool kit applications, may have been supplied by the subscriber at the point of sale 1 during this subscription process. Corresponding information may then be downloaded from the service provider at step 128 and written to the customer's SIM by the SIM reader 33 of the mobile terminal 2 at step 134.

If the result of the credit check is not satisfactory, the service provider will send a message to the user terminal 2 stating that this is the case and then terminate the communication at step 130.

Finally, when the subscription process is complete, the mobile terminal 2 is disconnected from the personal computer 5 and switched off and then on again, prior to use, at step 132. This has the effect of resetting user terminal and causing the SIM reader 33 to read into the user terminal memory the newly acquired data.

Thus, the present invention offers a new customer the possibility of subscribing to a mobile telecommunications service and being able to leave the point of sale 1 in a matter of minutes with a mobile terminal which is personalised and activated, and thus fully operational.

The skilled reader will realise that the present invention is particularly suited to the situation where individuals who wish to subscribe to mobile telecommunications service already own a smart card or SIM card. For example, in the case of multi-application smart cards, a subscriber who already uses a smart card for one or several other functions will find conventional subscription methods inconvenient if he is forced to send his smart card away to the service provider to be activated.

It will be clear from the foregoing that the above described embodiment is merely one way of putting the invention into effect. Many other alternatives will be apparent to the skilled person and are within the scope of the present invention.

For example, it is envisaged that a the system operator which deals with more than one service provider may choose to issue software to their dealers which contains more than one telephone number allowing the subscriber to telephone a service provider from a list of service providers, thus allowing the subscriber more choice in selecting his air time package.

Furthermore various aspects of the order in which the subscription process is implemented could be altered. For example, the customer's SIM could be replaced in the customer's user terminal after the step of generating the new customer record at step 120.

The skilled reader will realise that end-to-end encryption as fully described in British patent application No. 9611411.1, may also be incorporated into the present invention in order to further increase the security of the subscription. This may be especially useful in situations where the service provider uses, at least in part, a non-secure land based telecommunication system, such as the public switched telephone network (PSTN), in order to carry out the subscription operation.

The invention may also be utilised in terrestrial, non-satellite communications.

Whilst in the foregoing, user terminals have been referred to as "mobile", they could be fixed or transportable.

## Claims

1. A method of authorising a new subscriber to use a user terminal in a mobile communications system utilising a wireless communications link, comprising the steps of:
supplying authorisation data to a memory to be used in said user terminal, and storing said data in said memory for subsequent use in future communications sessions,
characterised in that said data is supplied by the steps of:
setting up a communications session through said wireless communications link; and
supplying said data through said link to said memory.

2. A method of authorisation according to claim 1, wherein said authorisation data is supplied by an authorisation centre of said mobile communications system.

3. A method of authorisation according to claim 1 or claim 2, wherein said authorisation data is supplied in encrypted form.

4. A method of authorisation according to claim 3, wherein said authorisation data is supplied in an end-to-end encrypted form.

5. A method of authorisation according to any preceding claim, wherein said authorisation data is supplied to memory at the point of sale.

6. A method of authorisation according to any preceding claim, wherein said user terminal is used to set up said communications session.

7. A method according to any preceding claim, wherein said memory comprises a subscriber identity module.

8. A method according to claim 7, wherein said subscriber identity module has an initial identity to enable the dial number for said communications session to be dialled from said user terminal.

9. A method according to any preceding claim, wherein said user terminal is a satellite telephone.

10. A method of authorising a new subscriber to use a user terminal in a mobile communications system utilising a wireless communications link, comprising the steps of:
supplying authorisation data to an authorisation station,
characterised in that said data is supplied by the steps of:
setting up a communications session through said wireless communications link; and
supplying said data through said link to said station.

11. An authorisation point for authorising a new subscriber to use a mobile terminal, comprising a computer arranged to connect to said mobile terminal and to communicate subscription data therethrough towards a remote station.

12. A method of activating a mobile communication terminal for use with a mobile communications system utilising a wireless communications link, comprising the steps of:
supplying authorisation data to an authorisation station,
characterised in that said data is supplied by the steps of:
setting up a communications session through said wireless communications link; and
supplying said data through said link to said station.
